# EUROPEAN PATENT SPECIFICATION

(11) **EP 4 519 637 B1**
(45) Date of publication and mention of the grant of the patent: **15.04.2026**
(21) Application number: 23725837.1
(22) Date of filing: 04.05.2023
(51) Int. Cl.: G01F 23/80, G01F 25/20, B64D 37/00

(54) **METHOD FOR IDENTIFYING MALFUNCTION CONDITIONS OF SENSORS THAT MEASURE THE AMOUNT OF FUEL IN THE TANKS OF AN AIRCRAFT**
VERFAHREN ZUR ERKENNUNG VON FEHLFUNKTIONSZUSTÄNDEN VON SENSOREN, DIE DIE KRAFTSTOFFMENGE IN TANKS EINES FLUGZEUGS MESSEN
PROCÉDÉ D'IDENTIFICATION DE CONDITIONS DE DYSFONCTIONNEMENT DE CAPTEURS QUI MESURENT LA QUANTITÉ DE CARBURANT DANS LES RÉSERVOIRS D'UN AÉRONEF

(30) Priority: 04.05.2022 IT 202200009131
(43) Date of publication of application: 12.03.2025
(73) Proprietor: Leonardo S.p.a., 00195 Roma (IT)
(72) Inventor: MASSIMO, Germano, 10146 TORINO (IT)
(74) Representative: Studio Torta S.p.A.
(86) International application number: PCT/IB2023/054651
(87) International publication number: WO 2023/214348

(56) References cited:
- EP-A1- 3 650 357
- WO-A2-02/35185
- US-A1- 2003 136 173
- US-A1- 2008 245 129

## Description

### Cross-Reference to Related Applications

This patent application is related to Italian Patent Application No. 102022000009131 filed on May 4, 2022

### Technical Field

The present invention relates to a method for identifying malfunction conditions of sensors that measure the amount of fuel in the tanks of an aircraft.

### Background of the invention

As known, each aircraft is provided with a plurality of fuel tanks, each of which is provided with a plurality of sensors intended to measure the amount of fuel within the tank. Several sensors are used in order to create a redundant and intrinsically safe measurement system, as measurement is particularly important during the flight of the aircraft.

Sensor control procedures are performed on the ground and are manual. An example thereof is provided by EP3650357A1.

During these control operations, each sensor is deemed to be as intact and usable if the measurement provided by the sensor corresponds, except for the measurement uncertainty, to the values given in the user manual for the "full tank" and "empty tank" conditions.

The known-type control procedure is time-consuming and expensive because it requires the tank to be placed in the completely empty condition and then in the completely full condition.

Further examples of the prior art are provided by: WO0235185A2, US2008245129A1 and US2003136173A1.

There is therefore a need to provide a method for identifying malfunction conditions of sensors that measure the amount of fuel in the tanks of an aircraft during the aircraft flight in a simple and effective manner.

### Summary of the invention

The aforesaid aim is achieved by the present invention in that it relates to a method for identifying malfunction conditions of sensors that measure the amount of fuel in the tanks of an aircraft, as defined in Claim 1.

### Brief description of the drawings

The invention will now be shown with reference to the attached drawings, which represent a non-limiting embodiment wherein:
Figure 1 shows a schematic perspective view of an aircraft which uses the method for identifying malfunction conditions of sensors that measure the amount of fuel made according to the present invention; and
Figure 2 shows in particular a block diagram of the method for identifying malfunction conditions of sensors that measure the amount of fuel realized according to the dictates of the present invention.

### Preferred embodiment

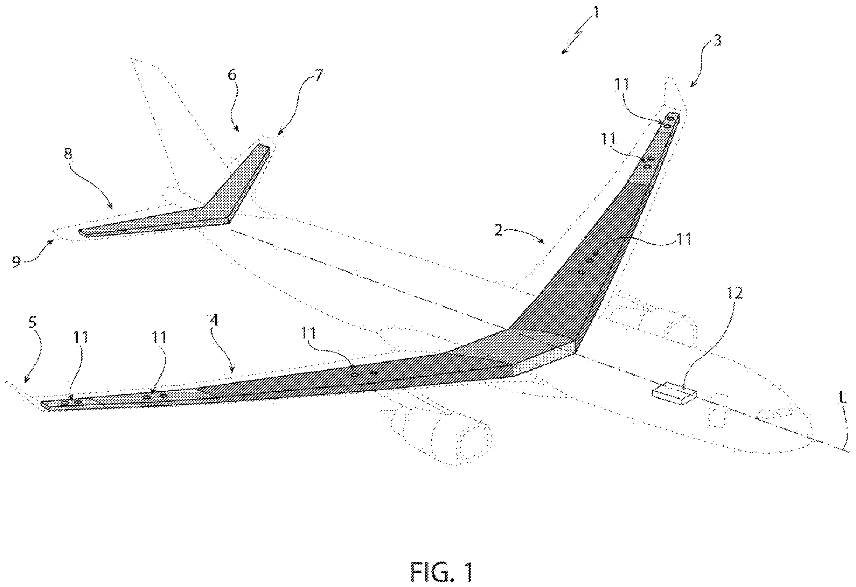

In Figure 1, number 1 denotes an aircraft (in the example an airliner, but the aircraft may be of any type) provided with a plurality of fuel tanks including:
a first plurality of fuel tanks 2 arranged on a first half-wing 3 of the aircraft (in the example an inner tank, an outer tank and an end tank but the arrangement and number of tanks may be different);
a second plurality of fuel tanks 4 arranged on a second half-wing 5 of the aircraft (in the example an inner tank, an outer tank and an end tank but the arrangement and number of tanks may be different);
a third plurality of tanks 6 arranged on a first tailplane 7; and
a fourth plurality of tanks 8 arranged on a second tailplane 9.

The tanks 2/6 and 4/8 are thus arranged on opposite sides of the longitudinal axis L of the fuselage of the aircraft 1.

Each of the tanks 2/6 and 4/8 is provided with a plurality m of sensors 11 (of the known type) which detect the level l₁, l₂, ...lᵢ, ...lₘ of fuel within the respective tanks 2/6 and 4/8 and transmit a fuel level signal to an electronic control device 12 (schematically shown).

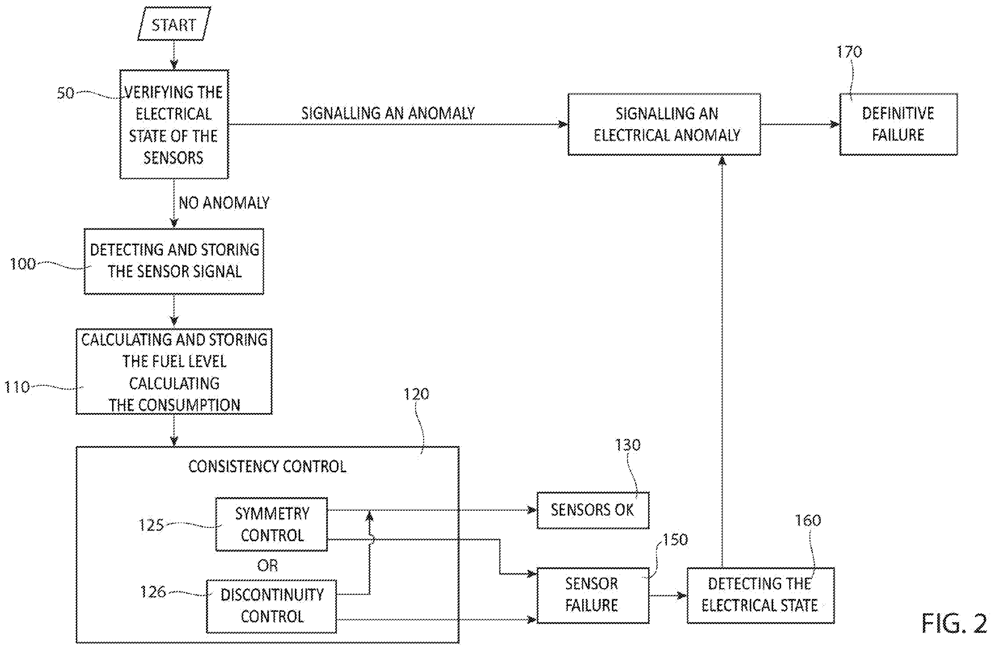

The electronic control device 12 is adapted to perform the following operations (Figure 2):
following the completion of power supply of the aircraft, the algorithm is started, which previously (block 50) verifies the electrical state of the m sensors. If at least one sensor has an electrically faulty state, e.g. is interrupted or does not produce a signal, the process is stopped, signalling the anomaly (block 70). Such an anomaly may result from one or more sensors operating outside the nominal operating ranges (under-range/over-range) or from one or more sensors not in line with the nominal operating ranges in relation to the amount of fuel in the tank. The electrical control of the sensors in block 50 is a "preliminary routine" that does not guarantee the perfect functionality of the sensors during the entire flight.

If all the sensors have been electrically detected as functioning in block 50 (no anomaly), the step of detecting and storing (block 100) the fuel level signal produced by each sensor 11 during the aircraft flight operations is carried out.

Next, the step of calculating and storing (block 110), based on the detected signal, the fuel level l₁, l₂, ...lᵢ,...lₘ associated with that sensor 11 is carried out - in this way, during the flight, after the reduction of the initial level of fuel (which is a value known at the time of the departure of the aircraft), the diagram of the consumption c₁, c₂, ...cᵢ, ...cₘ of fuel in each tank measured by each sensor 11 is tracked in terms of the reduction in time of the initial volume of fuel. The consumption values c₁, c₂, ...cᵢ, ...cₘ measured by each sensor 11 are stored and used for subsequent operations. Each sensor is then associated to a consumption c₁, c₂, ...cᵢ, ...cₘ by the electronic unit 12.

A consistency control is then carried out (block 120).

The consistency control of block 120 comprises the following operations that realise a **symmetry control** (block 125):
calculating, for each sensor 11, the gradient ∇ of the fuel level; and
comparing the gradients VsxVdxof the sensors 11 associated with the first plurality of tanks 2/6 and the second plurality of tanks 4/8 with each other - if the values of the gradients **∇sx∇dx** are close (i.e. the difference between gradients is within a confidence interval) a consistency condition is detected and block 120 is followed by a block 130 indicating that all m sensors are operating properly.

Otherwise (the value of the difference between the gradients **∇sx∇dx** is outside the confidence interval) a malfunction condition (sensor failure) due to a lack of symmetry is detected and block 120 is followed by a block 150.

The consistency control of block 120 can be carried out with the following operations (block 126) as an alternative to those illustrated above (operator OR), which carry out a **discontinuity control** for each tank:
adding up the consumptions c₁, c₂, ...cᵢ, ...cₘ associated with the sensors 11 during flight from block 110 defining a total fuel consumption (as a percentage of the initial content);
calculating the consumption gradient associated with each sensor 11;
calculating the gradient of the total fuel consumption;
calculating the average value of the gradients that realises a reference gradient; and
comparing the consumption gradient associated with each sensor 11 with the calculated average reference gradient and/or the total consumption gradient (as a percentage of the initial fuel value). If the comparison between gradients has a negative result, i.e. the differences between the measured amounts fall within a reference interval (and thus the amounts have similar values), block 120 is followed by block 130, which indicates that all m sensors are operating correctly.

In fact, under normal operating conditions of the sensors of a tank, the difference between the consumption gradients associated with any pair of sensors must differ, at each instant, by a value lower than the measurement uncertainty.

If a consumption gradient associated with a sensor deviates progressively from this condition, then that sensor is operating in an increasingly degraded condition and the occurrence of the fault condition is thus detected by numerical extrapolation as the consumption gradient deviates significantly from the average and/or total consumption gradient.

In fact, the consumption gradient associated with any one of the sensors should follow the gradient of total consumption.

A discontinuity in the values or sign of the consumption gradient associated with a sensor that does not match the average gradient of the sensors in the same tank or the corresponding total consumption gradient indicates a potential sensor failure.

In the event of a detected discontinuity, block 126 is followed by block 150, which detects the non-consistency in one or more sensors 11.

In case of a negative consistency control, block 150 is followed by block 160, which again verifies the electrical state of the m sensors. In case at least one sensor has a faulty electrical state, e.g. is interrupted or does not produce any signal, the process signals the anomaly in a similar way as for block 160.

Controlling block 160 is necessary as an abnormal detection of the volume of the individual sensor could depend on events not directly related to the sensor (i.e. malfunctioning jet pump or fuel pump, aircraft manoeuvres that may uncover or cover the sensor), so that the mere anomaly in the step of "monitoring volumes" of block 126 is a necessary but not sufficient condition for declaring the sensor failure. Only if the further electrical control detects an electrical anomaly, then the sensor is declared in definitive failure or degraded (block 170).

The procedure shown above overcomes the drawbacks of the prior art in that it allows to detect the state of the sensors regardless of the amount of fuel present in the tank, both for ground maintenance and during flight.

### numbers

- 1: aircraft.
- 2: tank.
- 3: first half-wing.
- 4: tank.
- 5: second half-wing.
- 6: tanks.
- 7: first tailplane.
- 8: tanks.
- 9: second tailplane.
- 11: sensors

## Claims

1. A method for identifying malfunction conditions of sensors (11) that measure the amount of fuel in the tanks of an aircraft (1) wherein an aircraft has at least one first tank (2/6) arranged on a first side of the aircraft and at least one second tank (4/8) arranged on a second side of the aircraft, the first and second tanks (2/6; 4/8) are arranged on opposite sides of a longitudinal axis (L) of the aircraft (1), each first and second tank (2/6; 4/8) is provided with a plurality m of sensors (11) that detect the level of fuel within the respective tank (2/6; 4/8) and transmit a level signal to an electronic control device (12) which is configured to calculate and store (block 110), based on the detected level signal, the diagram of the fuel consumption of each tank associated with each sensor (11) in terms of reduction in time of the initial fuel volume;
the control comprising the following operations:
detecting and storing (block 100) the signal produced by each sensor (11) during the flight of the aircraft;
carrying out a consistency control (block 120), **characterised in that** the consistency control alternatively comprises a symmetry control (125) or a discontinuity control (126);
the symmetry control (125) comprising the following operations:
calculating the fuel level gradient for each sensor (11); and
comparing the fuel level gradients of the sensors (11) associated with the first tank (2/6) and with the second tank (4/8); if the values of the level gradients compared are close, namely, the difference between the gradient values is comprised within a confidence interval, a consistency condition (130) is detected otherwise a malfunction condition (130) is detected due to a lack of symmetry;
in the case of positive consistency detection, an indication of correct operation of all the sensors is generated (block 130);
the discontinuity control comprising the following operations:
adding up the fuel consumption measured by the sensors (11) during the flight defining a total fuel consumption;
calculating the gradient of the consumption associated to each sensor (11);
calculating the average value of the gradients that realises a reference gradient; and
calculating the gradient of total fuel consumption;
comparing the consumption gradient associated to each sensor (11) with the reference gradient and/or the total consumption gradient;
if the values of the compared consumption gradients are close, namely, the difference is comprised within a confidence interval, a consistency condition (130) is detected otherwise a malfunction condition (150) is detected due to a discontinuity.

2. The method according to Claim 1, wherein, following the completion of power supply of the aircraft, a preliminary step (block 50) for verifying the electrical state of the m sensors is carried out; if at least one sensor has a faulty electrical state, the process is stopped signalling the anomaly;
if no sensor has a faulty electrical state, the symmetry control or the discontinuity control is performed.

3. The method according to Claim 2, wherein in case of a negative consistency control, the electrical state of the m sensors is verified again; if at least one sensor has a faulty electrical state, the anomaly is signalled and the sensor is declared as in definitive failure or degraded (block 170).

## Patentansprüche

1. Verfahren zur Erkennung von Fehlfunktionszuständen von Sensoren (11), welche die Kraftstoffmenge in den Tanks eines Flugzeugs (1) messen, wobei ein Flugzeug wenigstens einen ersten Tank (2/6), der auf einer ersten Seite des Flugzeugs angeordnet ist, und wenigstens einen zweiten Tank (4/8), der auf einer zweiten Seite des Flugzeugs angeordnet ist, hat, wobei die ersten und zweiten Tanks (2/6; 4/8) auf entgegengesetzten Seiten einer Längsachse (L) des Flugzeugs (1) angeordnet sind, wobei jeder erste und zweite Tank (2/6; 4/8) mit einer Vielzahl m von Sensoren (11) versehen ist, welche den Kraftstoffpegel in dem jeweiligen Tank (2/6; 4/8) messen und ein Pegelsignal an eine elektronische Steuervorrichtung (12) übertragen, welche konfiguriert ist, um basierend auf dem erfassten Pegelsignal das Kraftstoffverbrauchsdiagramm jedes zu dem jeweiligen Sensor (11) gehörenden Tanks in Form einer zeitlichen Verringerung des Anfangskraftstoffvolumens zu berechnen und zu speichern (Block 110);
wobei die Steuerung den folgenden Ablauf aufweist:
Erfassen und Speichern (Block 100) des Signals, das von jedem Sensor (11) während des Flugs des Flugzeugs erzeugt wird;
Ausführen einer Konsistenzkontrolle (Block 120), **dadurch gekennzeichnet, dass** die Konsistenzkontrolle alternativ eine Symmetriekontrolle (125) oder eine Unstetigkeitskontrolle (126) aufweist;
wobei die Symmetriekontrolle (125) den folgenden Ablauf aufweist:
Berechnen des Kraftstoffpegelgradienten für jeden Sensor (11); und
Vergleichen der Kraftstoffpegelgradienten der Sensoren (11), die zu dem ersten Tank (2/6) und zu dem zweiten Tank (4/8) gehören; wobei, wenn die verglichenen Werte der Pegelgradienten nahe beieinander liegen, und zwar die Differenz zwischen den Gradientenwerten innerhalb eines Sicherheitsintervalls liegt, ein Konsistenzzustand (130) erfasst wird und andernfalls aufgrund fehlender Symmetrie ein Fehlfunktionszustand (150) erfasst wird;
wobei im Fall der positiven Konsistenzerfassung eine Anzeige des korrekten Betriebs aller Sensoren erzeugt wird (Block 130);
wobei die Unstetigkeitskontrolle den folgenden Ablauf aufweist:
Addieren des von den Sensoren (11) während des Flugs gemessenen Kraftstoffverbrauchs, wobei ein Gesamtkraftstoffverbrauch definiert wird;
Berechnen des Gradienten des zu jedem Sensor (11) gehörenden Verbrauchs;
Berechnen des Mittelwerts der Gradienten, wobei ein Bezugsgradient erzeugt wird; und
Berechnen des Gradienten des Gesamtkraftstoffverbrauchs;
Vergleichen des zu jedem Sensor (11) gehörenden Verbrauchsgradienten mit dem Bezugsgradienten und/oder dem Gesamtverbrauchsgradienten;
wobei, wenn die Werte der verglichenen Verbrauchsgradienten nahe beieinander liegen, und zwar die Differenz innerhalb eines Sicherheitsintervalls liegt, ein Konsistenzzustand (130) erfasst wird und andernfalls aufgrund einer Unstetigkeit ein Fehlfunktionszustand (150) erfasst wird;

2. Verfahren nach Anspruch 1, wobei anschließend an die Fertigstellung der elektrischen Versorgung des Flugzeugs ein einleitender Schritt (Block 50) zur Überprüfung des elektrischen Zustands der m Sensoren ausgeführt wird; wobei das Verfahren, wenn wenigstens ein Sensor einen fehlerhaften elektrischen Zustand hat, beendet wird und die Unregelmäßigkeit signalisiert wird;
wobei, wenn kein Sensor einen fehlerhaften elektrischen Zustand hat, die Symmetriekontrolle oder die Unstetigkeitskontrolle durchgeführt wird.

3. Verfahren nach Anspruch 2, wobei der elektrische Zustand der m Sensoren im Fall einer negativen Konsistenzkontrolle erneut überprüft wird; wobei, wenn wenigstens ein Sensor einen fehlerhaften elektrischen Zustand hat, die Unregelmäßigkeit signalisiert wird und der Sensor als endgültig fehlerhaft oder beeinträchtigt erklärt wird (Block 170).

## Revendications

1. Méthode d'identification de conditions de dysfonctionnement de capteurs (11) qui mesurent la quantité de carburant dans les réservoirs d'un aéronef (1), dans laquelle l'aéronef comporte au moins un premier réservoir (2/6) agencé sur un premier côté de l'aéronef et au moins un deuxième réservoir (4/8) agencé sur un deuxième côté de l'aéronef, les premier et deuxième réservoirs (2/6 ; 4/8) sont agencés sur des côtés opposés d'un axe longitudinal (L) de l'aéronef (1), chaque premier et deuxième réservoir (2/6 ; 4/8) est pourvu d'une pluralité m de capteurs (11) qui détectent le niveau de carburant à l'intérieur du réservoir (2/6 ; 4/8) respectif et transmettent un signal de niveau à un dispositif de contrôle électronique (12) qui est configuré pour calculer et stocker (bloc 110), sur la base du signal de niveau détecté, le diagramme de la consommation de carburant de chaque réservoir associé à chaque capteur (11) en termes de réduction dans le temps du volume initial de carburant ;
le contrôle comprenant les opérations suivantes : la détection et le stockage (bloc 100) du signal produit par chaque capteur (11) pendant le vol de l'aéronef ;
la réalisation d'un contrôle de cohérence (bloc 120), **caractérisé en ce que** le contrôle de cohérence comprend en variante un contrôle de symétrie (125) ou un contrôle de discontinuité (126) ;
le contrôle de symétrie (125) comprenant les opérations suivantes :
le calcul du gradient de niveau de carburant pour chaque capteur (11) ; et
la comparaison des gradients de niveau de carburant des capteurs (11) associés au premier réservoir (2/6) et au deuxième réservoir (4/8) ; si les valeurs des gradients de niveau comparés sont proches, c'est-à-dire que la différence entre les valeurs de gradient est comprise dans un intervalle de confiance, une condition de cohérence (130) est détectée, sinon une condition de dysfonctionnement (130) est détectée en raison d'un manque de symétrie ;
dans le cas d'une détection de cohérence positive, une indication de bon fonctionnement de tous les capteurs est générée (bloc 130) ;
le contrôle de discontinuité comprenant les opérations suivantes :
la sommation de la consommation de carburant mesurée par les capteurs (11) pendant le vol pour définir une consommation totale de carburant ;
le calcul du gradient de la consommation associé à chaque capteur (11) ;
le calcul de la valeur moyenne des gradients qui réalise un gradient de référence ; et
le calcul du gradient de consommation totale de carburant ;
la comparaison du gradient de consommation associé à chaque capteur (11) avec le gradient de référence et/ou le gradient de consommation totale ;
si les valeurs des gradients de consommation comparés sont proches, c'est-à-dire que la différence est comprise dans un intervalle de confiance, une condition de cohérence (130) est détectée, sinon une condition de dysfonctionnement (150) est détectée en raison d'une discontinuité.

2. Méthode selon la revendication 1, dans laquelle, après l'achèvement de l'alimentation électrique de l'aéronef, une étape préliminaire (bloc 50) de vérification de l'état électrique des m capteurs est réalisée ; si au moins un capteur présente un état électrique défectueux, le processus est arrêté, signalant l'anomalie ;
si aucun capteur ne présente d'état électrique défectueux, le contrôle de symétrie ou le contrôle de discontinuité est effectué.

3. Méthode selon la revendication 2, dans laquelle, en cas de contrôle de cohérence négative, l'état électrique des m capteurs est à nouveau vérifié ; si au moins un capteur présente un état électrique défectueux, l'anomalie est signalée et le capteur est déclaré en panne définitive ou dégradé (bloc 170).
